# EUROPÄISCHE PATENTSCHRIFT

(11) **EP 3 596 377 B1**
(45) Veröffentlichungstag und Bekanntmachung des Hinweises auf die Patenterteilung: **28.04.2021**
(21) Anmeldenummer: 18714724.4
(22) Anmeldetag: 14.03.2018
(51) Int. Cl.: F16L 13/14, F16L 33/207

(54) **FITTING ZUM VERBINDEN MIT MINDESTENS EINEM ROHR UND VERFAHREN ZUM HERSTELLEN EINER VERBINDUNG**
FITTING FOR CONNECTING TO AT LEAST ONE PIPE AND METHOD FOR PRODUCING A CONNECTION
PIÈCE DE RACCORDEMENT DESTINÉE À ÊTRE RELIÉE À AU MOINS UN TUBE ET PROCÉDÉ DE RÉALISATION D'UN ASSEMBLAGE

(30) Priorität: 15.03.2017 DE 102017105505
(43) Veröffentlichungstag der Anmeldung: 22.01.2020
(73) Patentinhaber: Viega Technology GmbH & Co. KG, 57439 Attendorn (DE)
(72) Erfinder: SCHNEIDER, Andreas, 57413 Finnentrop - Schönholthausen (DE); KRAMER, Dominik, 57439 Attendorn (DE); SCHMITT, David, 57439 Attendorn (DE); RIILI, Nadine, 57368 Lennestadt (DE); SCHMITT, Detlev, 57489 Drolshagen (DE)
(74) Vertreter: Cohausz & Florack
(86) Internationale Anmeldenummer: PCT/EP2018/056417
(87) Internationale Veröffentlichungsnummer: WO 2018/167158

(56) Entgegenhaltungen:
- EP-A1- 1 933 073
- DE-A1- 19 545 361

## Beschreibung

Die Erfindung betrifft einen Fitting zum Verbinden mit mindestens einem Rohr, insbesondere Kunststoffrohr oder Kunststoff-Metall-Verbundrohr, mit einem Grundkörper, mit mindestens einem mit dem Grundkörper verbundenen, bevorzugt damit integral ausgebildeten Stützkörper zum Einführen in ein Rohrende und mit mindestens einer mit dem Grundkörper verbundenen Presshülse zum Aufnehmen des Rohrendes, wobei die Presshülse einen zylindrischen Pressabschnitt aufweist. Darüber hinaus betrifft die Erfindung auch ein Verfahren zum Herstellen einer Verbindung zwischen einem Fitting und einem Rohr.

Der für die vorliegende Erfindung relevante technische Bereich ist die baustellenseitige Installation von Rohrleitungssystemen, bei der allgemein für das Leiten und Führen eines Fluids ein aus Rohrabschnitten und Fittings bestehendes Rohrleitungssystem installiert wird. Als Fitting wird grundsätzlich ein Verbindungsstück einer Rohrleitung verstanden und wird am häufigsten zur Verbindung von zwei oder mehreren Rohrabschnitten eingesetzt. Das Fitting weist dementsprechend zwei oder mehr Pressabschnitte auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist dieser Fitting dann nur einen Pressabschnitt auf, um einen Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels eines Presswerkzeugs radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen rein radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen.

Bei radial zu verpressenden Presssystemen für Kunststoff- und Kunststoff-Metall-Mehrschichtverbundrohre werden vorzugsweise Presshülsen aus Edelstahl eingesetzt. Diese erfordern jedoch aufgrund der eingesetzten Geometrie und Materialstärke hohe Umform- bzw. Presskräfte, um die Verbindung herzustellen. Daher sind teure, spezielle und elektrisch angetriebene Pressmaschinen und Pressbacken erforderlich. Handpresswerkzeuge, die für einzelne Verpressungen, z. B. bei Reparaturen, eingesetzt werden, sind groß und unhandlich und benötigen hohe Betätigungskräfte.

In der EP 1 933 073 A1 ist beispielsweise ein Pressfitting für ein Rohr beschrieben, welcher mittels eines Presswerkzeugs verpresst wird und dadurch die Verbindung eines anzuschließenden Rohres ermöglicht.

Des Weiteren werden im Hinblick auf die zu erzielende Stabilität der Pressverbindung stark konturierte Pressgeometrien eingesetzt. Diese Pressgeometrien begünstigen aber das Festklemmen der Pressbacken auf der Presshülse und die Bildung von Pressfalten, die die Pressbacken beschädigen und Undichtigkeiten verursachen können. Daher ist eine dichte Verbindung meist nur durch mindestens eine Elastomerdichtung im Pressbereich zu gewährleisten.

Zudem bieten die bekannten Presshülsen keine oder nur eine unzureichende Führung für das Presswerkzeug oder können sich selbst beim Verpressen verschieben. Daher sind undichte Verbindungen die Folge.

Darüber hinaus ist trotz gegebenenfalls in der Wandung eingebrachter Bohrungen in der Presshülse die Einstecktiefe des Rohres schlecht erkennbar, da die Bohrungen als Sichtfenster zu klein sind. Auch dadurch können undichte Verbindungen entstehen, da die Einstecktiefe des Rohrendes nicht ausreichend überwacht werden kann. Außerdem können sich die Bohrungen beim Verpressen der Presshülse zusätzlich verformen und weiter verkleinern oder sogar zur Bildung von Pressfalten führen. Daher weichen Benutzer der beschriebenen Fittings insbesondere bei Reparaturen oder kleinen Installationen teilweise aus und benutzen andere Verbindungstechniken, z. B. Löten, Kunststoffschweißen, Schrauben, Kleben und müssen dann andere Nachteile in Kauf nehmen.

Der vorliegenden Erfindung liegt somit das technische Problem zugrunde, den eingangs genannten Fitting für ein Verpressen sowie das Verfahren zum Herstellen einer Verbindung insbesondere mit kleinen motorisch angetriebenen oder handgetriebenen Presswerkzeugen zu verbessern.

Das zuvor aufgeführte technische Problem wird erfindungsgemäß dadurch gelöst, dass die Presshülse aus einem Metall mit einer Mikrohärte von weniger als 65 HV 1, insbesondere kleiner als 50 HV 1, vorzugsweise im Bereich von 40 bis 50 HV 1 hergestellt ist und dass das Verhältnis aus Wandstärke des Pressabschnitts zum Außendurchmesser des Pressabschnitts kleiner als 0,06 ist, vorzugsweise im Bereich von 0,03 bis 0,06 liegt. Sämtliche vorangehend angegebenen Werte sind bestimmt nach Vickers.

Durch die zuvor beschriebene erfindungsgemäße Materialauswahl und Geometrie der Presshülse wird eine Reduzierung der Presskräfte bzw. Umformarbeit ermöglicht.

"Weiche" Hülsenwerkstoffe mit den angegebenen Mikrohärten, gemessen nach Vickers, in Kombination mit geringen Wandstärken führen zu einer guten Umformbarkeit der Presshülse. Somit ist es auch mit kleinen motorisch angetriebenen oder handgetriebenen Presswerkzeugen möglich, ein möglichst rundes und zugleich großflächiges Verpressen der Presshülse radial nach innen auf das Rohrende und in Richtung des radial innenliegenden Stützkörpers zu erreichen.

Die Härteprüfung nach Vickers dient zur Prüfung homogener Werkstoffe und wird insbesondere zur Härteprüfung dünnwandiger oder oberflächengehärteter Werkstücke und Randzonen eingesetzt. Die Härteprüfung nach Vickers ist in der Norm nach DIN EN ISO 6507-1:2005 bis -4:2005 geregelt. Bei der Prüfung wird eine gleichseitige Diamantpyramide mit einem Öffnungswinkel von 136° unter einer festgelegten Prüfkraft in das Werkstück eingedrückt. Aus der mittels eines Messmikroskops festgestellten Länge der Diagonalen des bleibenden Eindrucks wird die Eindruckoberfläche errechnet. Das Verhältnis von Prüfkraft in der Einheit Newton zur Eindruckoberfläche (d in Millimetern) ergibt mit dem Faktor 0,1891 multipliziert die Vickershärte (HV, engl. VHN = Vickers Hardness Number).

Um eine dichte und mechanisch belastbare Verbindung zu erreichen, ist bei dem beschriebenen Fitting ein gleichmäßiges, möglichst rundes, radiales Verpressen der Presshülsen über die gesamte Länge des zylindrischen Hülsenteils möglich. So erzielt man trotz der geringen erforderlichen Umformarbeit eine feste und dichte Verbindung, da das Rohrende auf einem deutlich größeren Bereich des Stützkörpers als bei aus dem Stand der Technik bekannten Systemen mit Edelstahlhülsen angepresst wird.

Aufgrund der großflächigen Anpressung des Rohres kann somit auf eine zusätzliche Elastomerdichtung verzichtet werden. Die aufgesteckten Rohre müssen daher nicht entgratet oder kalibriert werden. Diese Ausführung des großflächigen, gleichmäßigen Verpressens verhindert zudem des Entstehens von Pressfalten und das Festhängen der Pressbacke an der Presshülse, da sich beim Pressvorgang keine Furchen in der Presshülse bilden, wie bei bekannten Systemen mit zwei bis drei relativ schmalen, ringförmigen Pressstellen.

Somit werden mit dem erfindungsgemäßen Fitting für Rohrleitungssysteme mit Kunststoff- und Kunststoff-Metall-Mehrschichtverbundrohren die Umformarbeit, die Fehleranfälligkeit und die Kosten gegenüber bekannten Fittings reduziert. Dadurch können einfachere Presswerkzeuge eingesetzt werden, insbesondere angetrieben durch handelsübliche Maschinen, z. B. durch Akku-Schrauber, oder auch per Hand mit Hilfe von Gabel-/Maulschlüsseln oder Hebeln. Die beschriebene Verbindungstechnik ist somit insbesondere baustellengerecht auch im Rahmen kompletter Installationen und nicht nur für Reparaturen einsetzbar.

Die Materialauswahl beruht auf der Erkenntnis, dass sich besonders weiche Metalle mit einer Mikrohärte von weniger als 65 HV1, insbesondere kleiner als 50 HV1, vorzugsweise im Bereich von 40 bis 50 HV 1 gemessen nach Vickers besonders leicht umformen lassen und nach einem Umformen formstabil sind und nur geringe Rückstellkräfte auftreten.

Bei einer bevorzugten Ausgestaltung der vorliegenden Erfindung ist die Presshülse aus Kupfer, Kupfer-Legierungen oder aus Aluminium-Legierungen hergestellt. Diese, bei Fittings für Kunststoffrohre bzw. Kunststoff-Metall-Verbundrohre bisher nicht gebräuchlichen Metalle sind somit gemäß der vorliegenden Erfindung geeignet, das Material für die Presshülse zu bilden. Durch eine gezielte Wärmebehandlung können die eingesetzten Werkstoffe so beeinflusst werden, dass für die vorliegende Erfindung günstige Eigenschaften, insbesondere bezüglich der Härtewerte, erreicht werden.

In bevorzugter Weise kann bei dem beschriebenen Fitting zudem das Verhältnis der Länge des Pressabschnitts zum Außendurchmesser des Pressabschnitts größer als 0,4 sein und kann bevorzugt im Bereich zwischen 0,4 und 0,8 liegen. Dadurch wird bei der erläuterten Materialauswahl und Geometrie ein zuverlässig großer Pressabschnitt gewährleistet.

Der Grundkörper und der Stützkörper können im Übrigen aus einem harten thermisch stabilen ungefüllten, gefüllten oder bewehrten Kunststoff, beispielsweise Polysulfone, halogenierte Polyolefine, aromatische Polysulfide, Polyamide oder selbst aus einem Metall, beispielsweise Kupfer, Kupfer-Legierungen oder Eisen-Basis-Legierungen bestehen. Des Weiteren weist der Stützkörper in üblicher Weise eine äußere Kontur auf, vorzugsweise radial umlaufende Rippen und/oder axial verlaufende Rippen. Nach dem radialen Verpressen der Presshülse auf das Rohrende und somit des Rohrendes auf den Stützkörper dringt das harte Material des Stützkörpers in das Material des Rohrendes ein und führt sowohl zu einer Abdichtung als auch zu einer Auszugsfestigkeit und/oder Verdrehfestigkeit.

Bei einer weiteren bevorzugten Ausgestaltung des beschriebenen Fittings ist das zum Grundkörper distale Ende der Presshülse, beispielsweise in Form eines Kragens, nach außen umgebördelt und steht bevorzugt bis zu einem Winkel von 90° und insgesamt vorzugsweise 0,9 bis 1,2 mm über die äußere Fläche der Presshülse nach außen vor. Durch das Aufbiegen und die verwendeten Biegeradien entsteht am distalen Ende der Presshülse eine nach innen gerichtete trichterförmige Öffnung, die als Zentrierung des Rohrendes genutzt werden kann, sodass sich das Rohrende leichter auf den Fitting aufstecken lässt.

Des Weiteren weist das zum Grundkörper proximale Ende der Presshülse einen nach außen vorstehenden Wulst auf. Dieser Wulst oder auch Bördel ist somit ebenfalls aus dem Material der Presshülse geformt, wobei erneut die günstigen Umformeigenschaften des Materials und der Geometrie der Presshülse vorteilhaft sind. Somit bilden die beiden endseitigen Bördel bzw. Wulste zwei umlaufende Anschläge für ein Presswerkzeug, dass sowohl während des Ansetzens des Presswerkzeugs als auch während des Verpressens ein sicheres Führen und eine sichere Positionierung ermöglichen.

Alternativ dazu kann ein mit dem Grundkörper verbundener Haltering zum Befestigen der Presshülse am proximalen Ende vorgesehen sein. Somit ist die Presshülse nicht direkt mit dem Grundkörper verbunden, sondern steht mit dem Haltering in Verbindung. In diesem Fall dient der Haltering als zweiter Anschlag für das Presswerkzeug.

Somit ist die Presshülse entweder direkt mit dem Grundkörper oder mittels des Halterings mit dem Grundkörper verbunden. In beiden Ausgestaltungen kann die Verbindung der Presshülse mit dem Grundkörper bzw. mit dem Haltering mittels einer Nut-Feder-Verbindung realisiert werden. Diese Art der Verbindung ermöglicht ein einfaches Montieren der Presshülse, das üblicher Weise werkseitig erfolgt.

Eine weitere Ausgestaltung der Presshülse besteht darin, dass das zum Grundkörper proximale Ende der Presshülse einen alternierend unterbrochenen Rand mit Halteabschnitten und Aussparungen aufweist und dass umfangseitig die Aussparungen einen Winkelabschnitt von größer als 180° freigeben. Insbesondere sind die Aussparungen und Halteabschnitte umfangseitig gleichmäßig verteilt angeordnet und es sind mindestens je zwei, vorzugsweise je drei Halteabschnitte und Aussparungen vorgesehen.

Die zuvor beschriebene Ausgestaltung des proximalen Randes der Presshülse kann aufgrund des gut umformbaren Werkstoffs der Presshülse leicht hergestellt werden und die offene Formgebung des proximalen Endes ermöglicht eine leichte Einstellung der Stärke der Verrastung am Grundkörper bzw. am Haltering.

Des Weiteren kann durch die vergrößerten Aussparungen vor und nach dem Verpressen sicher kontrolliert werden, ob das Rohrende korrekt eingesteckt und dann verpresst wurde. Denn die offenen Bereiche der Ausschnitte dienen als Sichtfenster und sind größer als bei aus dem Stand der Technik bekannten Systemen.

Die großen zum Hülsenende hin offenen Aussparungen der beschriebenen Presshülse bewirken zudem, dass sich beim Verpressen keine Spannungen in diesem Bereich der Presshülse aufbauen und eine Gratbildung vermieden wird.

Das oben aufgezeigte technische Problem wird auch durch ein Verfahren zum Herstellen einer Verbindung zwischen einem Fitting und einem Rohr mit einem zuvor beschriebenen Fitting gelöst, wobei der Fitting einen Stützkörper und eine Presshülse mit einem zylindrischen Pressabschnitt aufweist, bei dem ein Rohrende zwischen dem Stützkörper und der Presshülse angeordnet wird, bei dem ein Presswerkzeug mit einer zylindrischen Presskontur an den Pressabschnitt angesetzt wird und bei dem die Presshülse durch die Presskontur über die Länge des Pressabschnitts radial zylindrisch verpresst wird.

Durch das Verpressen der Presshülse mit dem zylindrischen Pressabschnitt mittels eines Presswerkzeugs, das eine ebenfalls zylindrische Presskontur aufweist, wird die Presshülse entlang des Pressabschnitts zylindrisch, also gleichmäßig und radial gleich verteilt umgeformt. Mit diesem Verfahren wird somit ein gleichmäßiges Verpressen der Presshülse über eine vorgegebene Länge des Pressabschnitts erreicht. Vorzugsweise ist das Verpressen möglichst rund, also in radialer Richtung gesehen mit gleicher Eindringtiefe. Dadurch wird die an das Rohrende angepresste Oberfläche zwischen der Presshülse und dem Rohrende größer und gleichmäßiger, verglichen mit herkömmlichen Pressprofilen mit unterschiedlicher Eindringtiefe der Presshülse in das Material des Rohrendes. Aufgrund dieser großflächigen Anpressung des Rohrendes kann auf eine zusätzliche Elastomerdichtung verzichtet werden. Die eingesteckten Rohre müssen daher nicht entgratet oder kalibriert werden.

Diese Ausführungsform der großflächigen, gleichmäßigen Verpressung verhindert zudem die Entstehung von Pressfalten und das Festhängen der Pressbacke, da sich keine Furchen in der Hülse bilden, wie bei bekannten Systemen mit zwei bis drei relativ schmalen, ringförmigen Pressstellen.

Auch hierbei ist es vorteilhaft, wenn die Presshülse über eine axiale Länge zylindrisch verpresst wird, deren Verhältnis zum Außendurchmesser des Pressabschnitts größer ist als 0,4, bevorzugt im Bereich zwischen 0,4 und 0,8 liegt. Durch Einhalten dieses Länge-zu-Durchmesserverhältnisses wird die Verbindung besonders stabil und sicher.

In einer weiteren bevorzugten Ausgestaltung des Verfahrens wird das Presswerkzeug zumindest auf einer Seite des Pressabschnitts durch einen durch die Presshülse gebildeten Anschlag geführt, vorzugsweise durch zwei von der Presshülse gebildete Anschläge. Dadurch wird das Verfahren weiter verbessert, da ein positionsgenaues Ansetzen und Verpressen ohne Verrutschen der Presshülse erleichtert wird.

Durch den beschriebenen Fitting und das Verfahren zum Herstellen einer Verbindung wird somit insgesamt das Fehlerpotential durch Vermeidung loser Teile durch eine vorab erfolgte Befestigung der Presshülse an dem Grundkörper, durch einen Verzicht auf ein elastisches Dichtelement und damit geringe Schmutzanfälligkeit, durch eine gute Erkennbarkeit der Rohreinstecktiefe und/oder durch eine beidseitige Führung für das Presswerkzeug verringert.

Im Folgenden wird die Erfindung anhand von Ausführungsbeispielen mit Bezug auf die Zeichnung erläutert. In der Zeichnung zeigen
- Fig. 1 und 2: ein erstes Ausführungsbeispiel eines erfindungsgemäßen Fittings,
- Fig. 3 und 4: ein zweites Ausführungsbeispiel eines erfindungsgemäßen Fittings,
- Fig. 5 bis 7: ein drittes Ausführungsbeispiel eines erfindungsgemäßen Fittings,
- Fig. 8 und 9: das dritte Ausführungsbeispiel im Detail,
- Fig. 10: den bei den Ausführungsbeispielen verwendete Grundkörper und
- Fig. 11 bis 13: das dritte Ausführungsbeispiel in drei Phasen der Herstellung einer Verbindung mit einem Rohrende.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

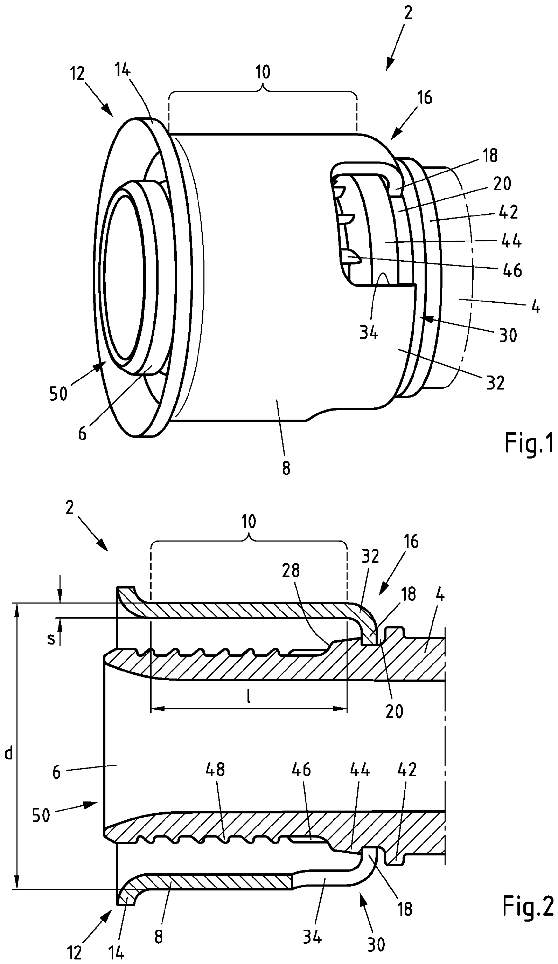

Die Fig. 1 und 2 zeigen ein erstes Ausführungsbeispiel eines Fittings 2 zum Verbinden mit mindestens einem Rohr, insbesondere Kunststoffrohr oder Kunststoff-Metall-Verbundrohr. Das Fitting 2 weist einem Grundkörper 4, der nur mit einem Ende dargestellt ist und an mindestens einem weiteren, sich in den Fig. 1 und 2 nach rechts erstreckenden weiteren Ende mit einer gleichen Fittinggeometrie oder einer anderen Anschlussgeometrie ausgebildet ist.

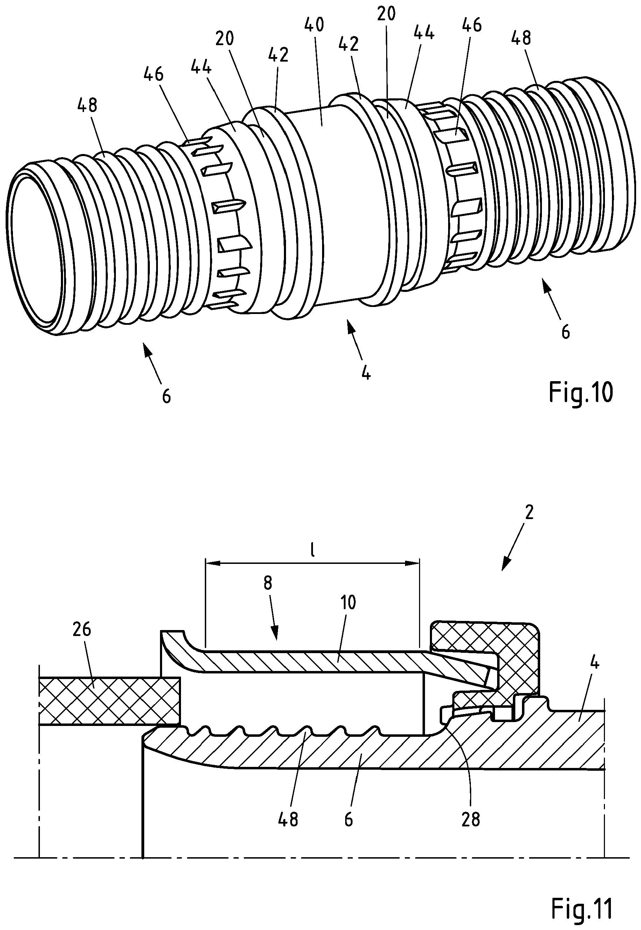

Ein mit dem Grundkörper 4 verbundener und vorliegend integral ausgebildeter Stützkörper 6 ist vorgesehen, um in ein (hier nicht dargestelltes) Rohrende eingeführt zu werden. Für eine Darstellung mit Rohrende wird auf die Diskussion der Fig. 11 bis 13 weiter unten verwiesen. Des Weiteren ist eine mit dem Grundkörper 4 verbundene Presshülse 8 zum Aufnehmen des Rohrendes vorgesehen, wobei die Presshülse 8 einen zylindrischen Pressabschnitt 10 aufweist.

Erfindungsgemäß ist die Presshülse 8 aus einem Metall mit einer Mikrohärte von weniger als 65 HV1, insbesondere kleiner als 50 HV1, vorzugsweise im Bereich von 40 bis 50 HV 1 gemessen nach Vickers hergestellt. Dadurch weist die Presshülse 8 eine so geringe Mikrohärte auf, dass sie einerseits bei der Herstellung leicht zuverlässig in die notwendige Form gebracht werden kann und andererseits beim Herstellen einer Rohrverbindung ebenso leicht und zuverlässig umgeformt werden kann.

Weiterhin ist das Verhältnis aus Wandstärke s des Pressabschnitts 10 zum Außendurchmesser d des Pressabschnitts 10 kleiner als 0,06 und liegt vorzugsweise im Bereich von 0,03 bis 0,06. Bei dem dargestellten Ausführungsbeispiel liegt ein Wert von 0,05 vor. Als Außendurchmesser können beispielsweise Nennweiten von 16, 20 oder 25 mm angegeben werden, wobei diese Zahlenangaben nicht beschränkend zu verstehen sind.

Ein weiteres Merkmal der Geometrie der Presshülse ist das Verhältnis der Länge l des Pressabschnitts 10 zum Außendurchmesser d des Pressabschnitts 10, dessen Wert größer ist als 0,4, bevorzugt im Bereich zwischen 0,4 und 0,8 liegt. Durch diese Längengeometrie wird eine gute Verformbarkeit bei vorgegebener Wandstärke und Durchmesser erreicht.

Die oben genannten Härtewerte für das Material der Presshülse 8 liegen in einem Bereich, der den Einsatz von Kupfer, Kupfer- oder Aluminium-Legierungen ermöglicht. Durch eine geeignete Auswahl von Material, Geometrie und Fertigungsverfahren können die Presshülsen preiswert hergestellt werden.

Wie sich weiter aus den Fig. 1 und 2 ergibt, ist das zum Grundkörper 4 distale Ende 12 der Presshülse 10 nach außen umgebördelt, so dass ein Kragen 14 entsteht, der bis zu 90° nach außen umgebogen ist und 0,9 bis 1,2 mm nach außen vorsteht. In ähnlicher Weise weist das zum Grundkörper 4 proximale Ende 16 der Presshülse 10 einen radial nach innen gerichteten Kragen 18 auf, der in eine am Grundkörper 4 ausgebildete Nut 20 eingreift. In dieser Weise ist die Presshülse 8 mit dem Grundkörper 4 verbunden.

Der Kragen 14 weist eine konisch zulaufende Innenkontur auf, die ein Einführen eines Rohrendes in die Presshülse 8 erleichtert. Die gebogene Außenseite des Kragens 14 stellt wiederum einen einseitigen Anschlag und eine damit verbundene Führung für ein Presswerkzeug dar, wie weiter unten noch erläutert wird.

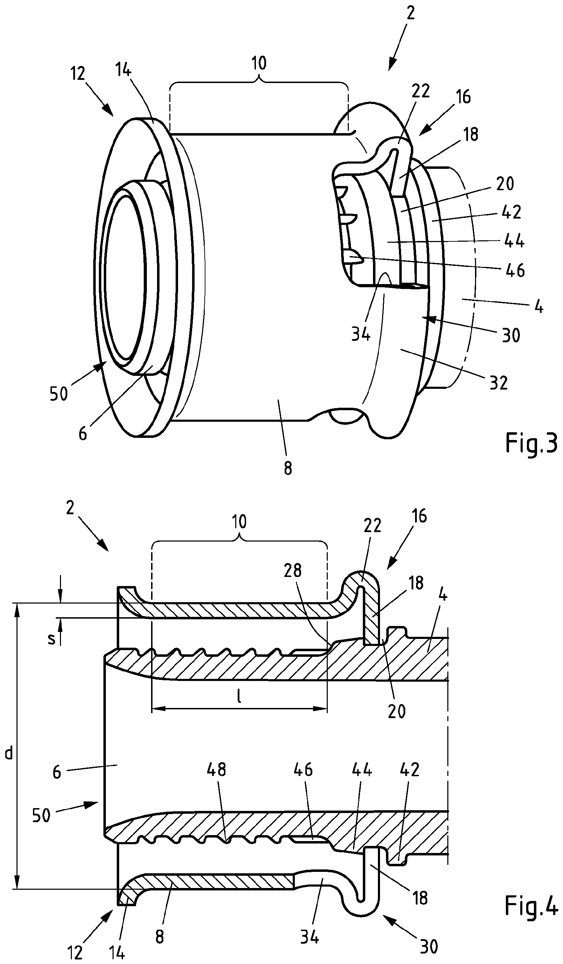

Die Fig. 3 und 4 zeigen ein zweites Ausführungsbeispiel eines erfindungsgemäßen Fittings 2. Der Aufbau des Fittings 2 entspricht weitgehend dem Aufbau des Fittings gemäß den Fig. 1 und 2, so dass gleiche Bezugszeichen gleiche Elemente des Fittings 2 bezeichnen. Der Unterschied im Aufbau besteht darin, dass der am Ende 16 der Presshülse 10 angeordnete Kragen 18 zunächst einen nach außen vorstehenden Wulst 22 bildet. Zusammen mit dem Kragen 14 werden zwei umlaufende Anschläge für ein Presswerkzeug gebildet, die den Pressabschnitt 10 zu beiden Seiten axial begrenzen. Somit wird eine verbesserte Führung eines Presswerkzeugs als beim ersten Ausführungsbeispiel erreicht.

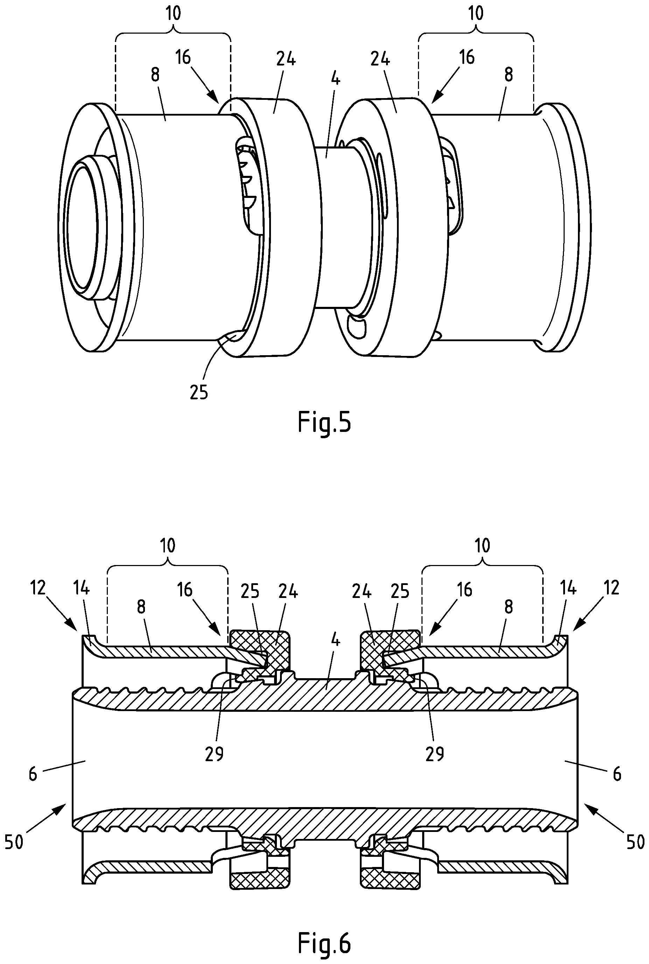

Die Fig. 5 und 6 zeigen ein drittes Ausführungsbeispiel eines erfindungsgemäßen Fittings 2, wobei der Fitting 2 als ein geradliniger Fitting mit zwei Presshülsen 8 zum Verbinden von zwei Rohren ausgebildet ist. Der Aufbau des Fittings 2 entspricht wiederum weitgehend dem Aufbau des Fittings gemäß den Fig. 1 und 2, so dass erneut gleiche Bezugszeichen gleiche Elemente des Fittings 2 bezeichnen.

Der Unterschied im Aufbau besteht darin, dass ein mit dem Grundkörper 4 verbundener Haltering 24 zum Befestigen der Presshülse 8 am Grundkörper 4 vorgesehen ist. Der Haltering 24 besteht bevorzugt aus einem Kunststoff, um über die Werkstoffeigenschaften, insbesondere den Härtegrad, und die Geometrie die Halteeigenschaften zu beeinflussen, z. B. sehr hohe Klemmkräfte oder einfache Austauschbarkeit. Der Haltering 24 kann aber auch aus einem Metall hergestellt sein. Der Haltering 24 ist durch ein Verrasten und/oder ein Verklemmen mit dem Grundkörper 4 verbunden.

Der Haltering 24 weist eine umlaufende und zum distalen Ende 12 der Presshülse 8 ausgerichtete Nut 25 auf, in die das proximale Ende 16 der Presshülse 8 eingreift und durch ein Klemmen und/oder Verrasten befestigt ist. Somit werden in ähnlicher Weise wie beim zweiten Ausführungsbeispiel zwei umlaufende Anschläge zur Führung eines Presswerkzeugs durch den Kragen 14 und den Haltering 24 gebildet, die den Pressabschnitt 10 zu beiden Seiten axial begrenzen.

Bei der nachfolgenden Diskussion weiterer Merkmale und Verfahrensschritte wird jeweils auf das dritte Ausführungsbeispiel Bezug genommen. Das ist nicht beschränkend zu verstehen, da die beiden ersten Ausführungsbeispiele ebenfalls in gleicher Weise ausgestaltet und verarbeitet werden können.

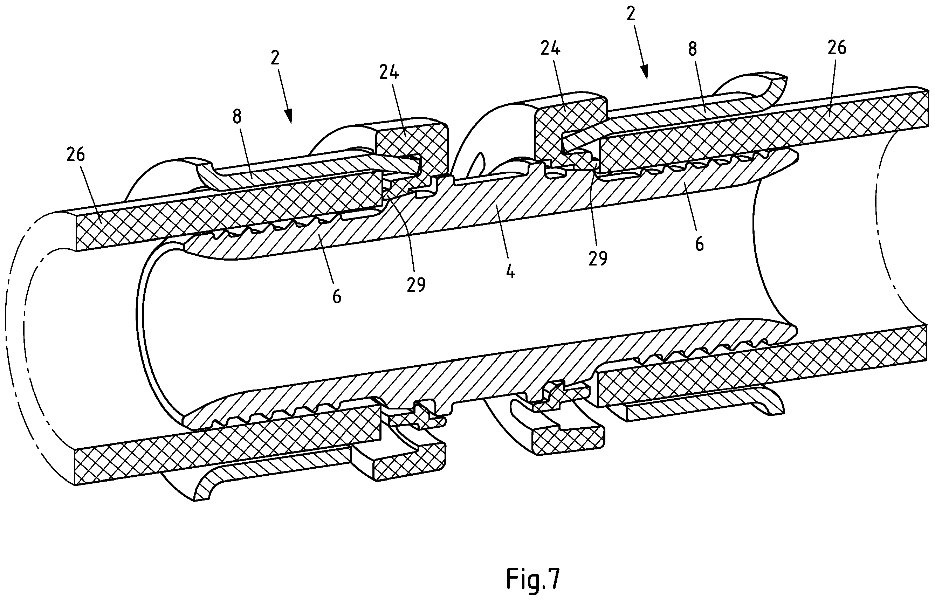

Fig. 7 zeigt das dritte Ausführungsbeispiel des Fittings 2 nach den Fig. 5 und 6, wobei zu beiden Seiten jeweils ein Rohr 26 in die Presshülsen 8 eingeführt worden ist. Dabei sind die Rohre 26 als Kunststoffrohr ausgebildet. Ebenso ist eine Ausbildung der Rohre 26 als Kunststoff-Metall-Verbundrohr möglich. Die Rohre bzw. Rohrenden 26 sind jeweils bis zu einem an der Innenseite des Halterings 24 ausgebildeten Anschlag 29 eingeschoben. Dazu sind am Haltering 24 umfangseitig insgesamt drei Anschläge 29 ausgebildet, so dass in den Fig. 6 und 7 nur oberhalb des Rohrendes 26 der Anschlag 29 zu erkennen ist.

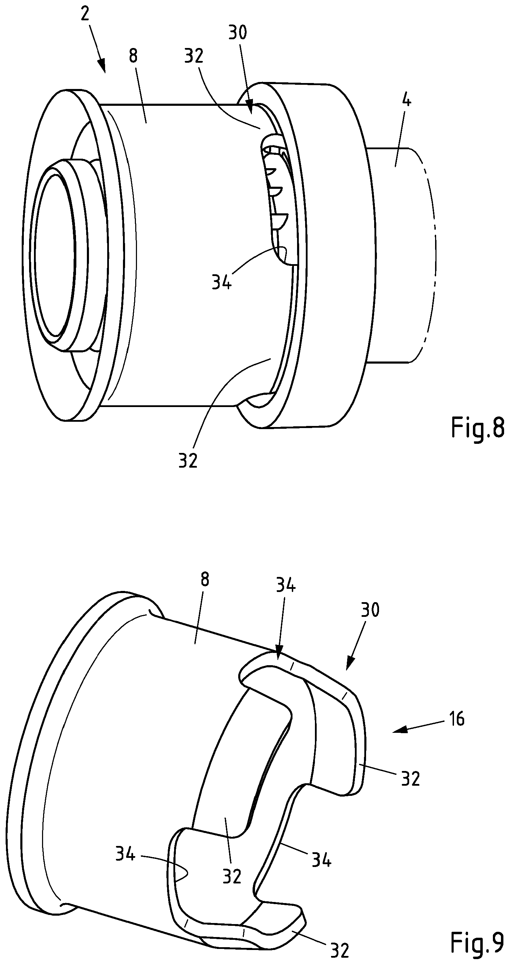

Bei den in den Fig. 1 bis 7 dargestellten Ausführungsbeispielen sowie bei dem im Detail in den Fig. 8 und 9 nochmals dargestellten dritten Ausführungsbeispiel ist vorgesehen, dass das zum Grundkörper 4 proximale Ende 16 der Presshülse 8 einen alternierend unterbrochenen Rand 30 mit Halteabschnitten 32 und Aussparungen 34 aufweist und dass umfangseitig die Aussparungen 34 insgesamt einen Winkelabschnitt von größer als 180° freigeben. Das bedeutet, dass die umfangseitige Länge der Aussparungen größer als die umfangseitige Länge der Halteabschnitte 32 ist. Der von den Aussparungen freigegebene Winkelabschnitt kann beispielsweise 220° oder auch 240° betragen.

Wie sich aus den Figuren ergibt, sind die Halteabschnitte 32 und die Aussparungen 34 umfangseitig gleichmäßig verteilt angeordnet. Dadurch wird eine stabile Konstruktion erreicht. Wie sich jeweils aus den perspektivischen Darstellungen in den Fig. 1, 3, 5 und 8 ergibt, ergeben sich durch die Aussparungen 34 im zusammengebauten Zustand große Sichtfenster, die einen Blick in den Bereich freigeben, in den hinein das Rohrende 26 bei richtiger Montage eingeschoben sein muss. Somit kann vor und vor allem auch nach dem Verpressen der Presshülse 8 eine eindeutige Kontrolle der hergestellten Verbindung durchgeführt werden.

Fig. 10 zeigt den Grundkörper 4 zusammen mit zwei damit verbundenen Stützkörpern 6. Der Grundkörper 4 weist eine im Wesentlichen axialsymmetrische Form mit einem Mittelabschnitt 40 mit zwei angrenzenden umlaufenden Vorsprüngen 42 und 44, die zwischen sich die oben bereits erwähnte Nut 20 ausbilden. Axial nach außen daran anschließend sind axial verlaufende Stege oder Rippen 46 angeordnet, die bei verpresster Presshülse in das Material des Rohrendes eindringen und eine Verdrehsicherung bilden. Daran schließen sich jeweils mehrere radial umlaufende Rippen 48 an, die bei verpresster Presshülse ebenfalls in das Material des Rohrendes eindringen und eine Auszugssicherung bilden. Abweichend von dieser Darstellung, können die axialen und radialen Rippen auch in anderer Reihenfolge angeordnet sein. Die beiden distalen Enden 50 der Stützkörper sind an den Außenkanten abgeschrägt ausgebildet, um ein Einführen des Stützkörpers 6 in ein Rohrende zu erleichtern. Die zuvor erläuterten Merkmale sind - soweit zu erkennen - auch in den Fig. 1 bis 9 gekennzeichnet.

Die Fig. 11 bis 13 zeigen drei Phasen eines Pressvorgangs mit einem Fitting gemäß dem dritten Ausführungsbeispiel. Bei dem dargestellten Verfahrensablauf zum Herstellen einer Verbindung zwischen einem Fitting 2 und einem Rohr 26, wobei der Fitting 2 einen Stützkörper 4 und eine Presshülse 8 mit einem zylindrischen Pressabschnitt 10 aufweist.

Zunächst zeigt Fig. 11 das Einführen des Rohres 26, so dass das Rohrende 26 zwischen dem Stützkörper 6 und der Presshülse 8 angeordnet wird. Dabei soll sichergestellt werden, dass das Rohrende 26 bis zu dem Anschlag 28 eingeschoben wird.

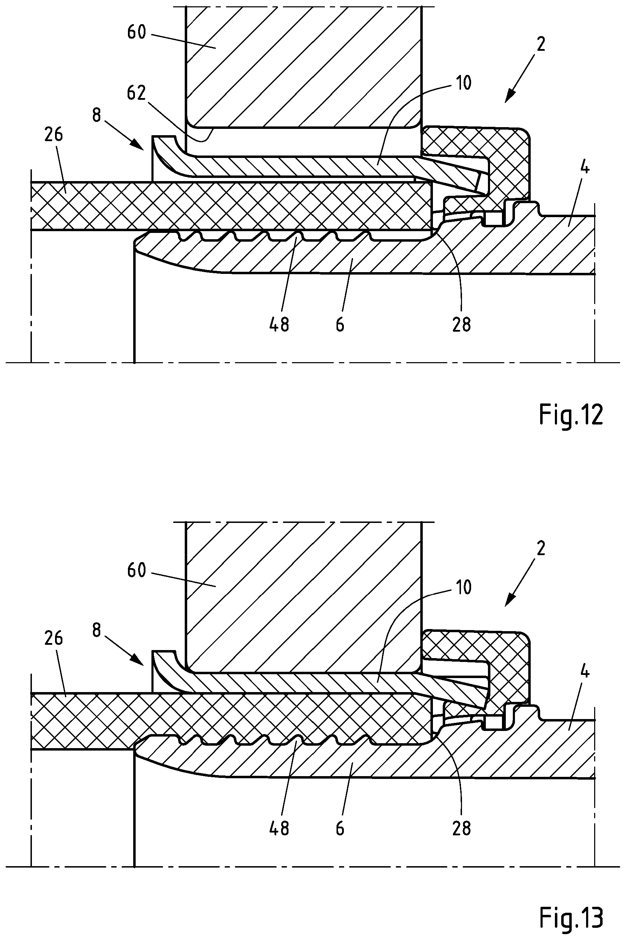

Anschließend wird gemäß Fig. 12 ein Presswerkzeug 60 oder eine Pressbacke 60 eines Presswerkzeugs mit einer zylindrischen Presskontur 62 an den Pressabschnitt 10 angesetzt. Dadurch kommt es zu einer flächigen Anlage der zylindrischen Presskontur 62 am zylindrischen Pressabschnitt 10.

Wie sich aus Fig. 13 ergibt, wird die Presshülse 8 durch die Presskontur 62 über die Länge l des Pressabschnitt 10 radial zylindrisch verpresst. Somit entsteht eine flächige Anlage der Presshülse 8 am Rohrende 26, das dadurch in die konturierte Oberfläche (Rippen 46 und 48) des Stützkörpers 6 eingedrückt wird.

Wie sich aus der Diskussion des ersten Ausführungsbeispiels des erfindungsgemäßen Fittings 2 ergibt, wird die Presshülse 8 über eine axiale Länge l zylindrisch verpresst, deren Verhältnis zum Außendurchmesser d des Pressabschnitts 10 größer ist als 0,4, bevorzugt im Bereich zwischen 0,4 und 0,8 liegt.

Ebenso wird aus den Fig. 12 und 13 deutlich, dass das Presswerkzeug 60 auf beiden Seiten des Pressabschnitts 10 durch von der Presshülse 8 und dem Haltering 24 gebildete Anschläge während des Ansetzens und des Verpressens geführt wird.

## Patentansprüche

1. Fitting zum Verbinden mit mindestens einem Rohr, insbesondere Kunststoffrohr oder Kunststoff-Metall-Verbundrohr,
- mit einem Grundkörper (4),
- mit mindestens einem mit dem Grundkörper (4) verbundenen Stützkörper (6) zum Einführen in ein Rohrende und
- mit mindestens einer mit dem Grundkörper (4) verbundenen Presshülse (8) zum Aufnehmen des Rohrendes,
- wobei die Presshülse (8) einen zylindrischen Pressabschnitt (10) aufweist,
**dadurch gekennzeichnet,**
- **dass** die Presshülse (8) aus einem Metall mit einer Mikrohärte von weniger als 65 HV, insbesondere kleiner als 50 HV1, vorzugsweise im Bereich von 40 bis 50 HV 1 gemessen nach Vickers hergestellt ist und
- **dass** das Verhältnis aus Wandstärke (s) des Pressabschnitts (10) zum Außendurchmesser (d) des Pressabschnitts (10) kleiner als 0,06 ist, vorzugsweise im Bereich von 0,03 bis 0,06 liegt.

2. Fitting nach Anspruch 1,
**dadurch gekennzeichnet,**
**dass** das Verhältnis der Länge (1) des Pressabschnitts (10) zum Außendurchmesser (d) des Pressabschnitts (10) größer ist als 0,4 und bevorzugt im Bereich zwischen 0,4 und 0,8 liegt.

3. Fitting nach Anspruch 1 oder 2,
**dadurch gekennzeichnet,**
**dass** die Presshülse (8) aus Kupfer oder aus Aluminium hergestellt ist.

4. Fitting nach einem der Ansprüche 1 bis 3,
**dadurch gekennzeichnet,**
- **dass** das zum Grundkörper (4) distale Ende (12) der Presshülse (8) nach außen umgebördelt ist und
- **dass** das zum Grundkörper (4) proximale Ende (16) der Presshülse (8) einen nach außen vorstehenden Wulst (22) aufweist.

5. Fitting nach einem der Ansprüche 1 bis 3,
**dadurch gekennzeichnet,**
- **dass** das zum Grundkörper (4) distale Ende (12) der Presshülse (8) nach außen umgebördelt ist und
- **dass** ein mit dem Grundkörper (4) verbundener Haltering (24) zum Befestigen der Presshülse (8) vorgesehen ist.

6. Fitting nach einem der Ansprüche 1 bis 5,
**dadurch gekennzeichnet,**
- **dass** das zum Grundkörper (4) proximale Ende (16) der Presshülse (8) einen alternierend unterbrochenen Rand (30) mit Halteabschnitten (32) und Aussparungen (34) aufweist und
- **dass** umfangseitig die Aussparungen (34) einen Winkelabschnitt von größer als 180° freigeben.

7. Verfahren zum Herstellen einer Verbindung zwischen einem Fitting nach einem der Ansprüche 1 bis 6 und einem Rohr,
- wobei der Fitting einen Stützkörper und eine Presshülse mit einem zylindrischen Pressabschnitt aufweist,
- bei dem ein Rohrende zwischen dem Stützkörper und der Presshülse angeordnet wird,
- bei dem ein Presswerkzeug mit einer zylindrischen Presskontur an den Pressabschnitt angesetzt wird und
- bei dem die Presshülse durch die Presskontur über die Länge des Pressabschnitt radial zylindrisch verpresst wird.

8. Verfahren mach Anspruch 7,
bei dem die Presshülse über eine axiale Länge zylindrisch verpresst wird, deren Verhältnis zum Außendurchmesser des Pressabschnitts größer ist als 0,4, bevorzugt im Bereich zwischen 0,4 und 0,8 liegt.

9. Verfahren mach Anspruch 7 oder 8,
bei dem das Presswerkzeug zumindest auf einer Seite des Pressabschnitts durch einen durch die Presshülse gebildeten Anschlag geführt wird.

## Claims

1. Fitting to be connected to at least one pipe, in particular plastic pipe or plastic-metal composite pipe,
- with a main body (4),
- with at least one to the main body (4) connected supporting body (6) for insertion into a pipe end, and
- with at least one to the main body (4) connected pressing sleeve (8) for receiving the pipe end,
- wherein the pressing sleeve (8) has a cylindrical pressing portion (10),
**characterised in that,**
- the pressing sleeve (8) is made of a metal with a microhardness of less than 65 HV, in particular less than 50 HV 1, preferably in the range from 40 to 50 HV 1 as measured according to Vickers, and
- the ratio of wall thickness (s) of the pressing section (10) to the outer diameter (d) of the pressing section (10) is less than 0.06, preferably in the range from 0.03 to 0.06.

2. Fitting according to claim 1,
**characterised in that**,
the ratio of the length (1) of the pressing section (10) to the outer diameter (d) of the pressing section (10) is greater than 0.4 and preferably is in the range between 0.4 and 0.8.

3. Fitting according to claim- 1 or 2,
**characterised in that**,
the pressing sleeve (8) is made of copper or aluminum.

4. Fitting according to anyone of claims 1 to 3,
**characterised in that**,
- the to the main body (4) distal end (12) of the pressing sleeve (8) is flanged outwards, and
- the to the main body (4) proximal end (16) of the pressing sleeve (8) has an outwardly projecting bead (22).

5. Fitting according to anyone of claims 1 to 3,
**characterised in that**,
- the to the main body (4) distal end (12) of the pressing sleeve (8) is flanged outwards, and
- a retaining ring (24) connected to the main body (4) is provided for attaching the pressing sleeve (8).

6. Fitting according to anyone of claims 1 to 5,
**characterised in that**,
- the to the main body (4) proximal end (16) of the pressing sleeve (8) has an alternately interrupted edge (30) with holding sections (32) and recesses (34) and
- on the circumferential side the recesses (34) release an angular section of greater than 180°.

7. Method for establishing a connection between a fitting and a pipe according to any of Claims 1 to 6,
- wherein the fitting comprises a supporting body and a pressing sleeve having a cylindrical pressing portion,
- where a pipe end is arranged between the supporting body and the pressing sleeve,
- in which a pressing tool with a cylindrical pressing contour is applied to the pressing section, and
- in which the pressing sleeve is radially cylindrically pressed through the pressing contour over the length of the pressing section.

8. Method according to claim 7,
in which the pressing sleeve is pressed cylindrically over an axial length whose ratio to the outer diameter of the pressing section is greater than 0.4, preferably in the range between 0.4 and 0.8.

9. Method according to claim 7 or 8,
in which the pressing tool is guided at least on one side of the pressing section through a limit formed by the pressing sleeve.

## Revendications

1. Fitting pour raccorder au moins un tuyau, en particulier un tuyau en plastique ou un tuyau composite plastique-métal,
- avec un corps de base (4),
- avec au moins un corps de support (6) relié au corps de base (4) pour Insertion dans une extrémité de tuyau et
- avec au moins un manchon de pressage (8) relié au corps de base (4) pour recevoir l'extrémité du tuyau,
- où le manchon de pressage (8) présente une section de pressage cylindrique (10),
**caractérisé**
- **en ce que** le manchon de pressage (8) est fabriqué à partir d'un métal avec une microdureté inférieure à 65 HV, en particulier inférieure à 50 HV1, de préférence dans la plage de 40 à 50 HV 1 mesurée selon Vickers, et
- **en ce que** le rapport entre l'épaisseur de paroi (s) de la section de pressage (10) et le diamètre extérieur (d) de la section de pressage (10) est inférieur à 0,06, de préférence compris entre 0,03 et 0,06.

2. Fitting selon la revendication 1,
**caractérisé**
**en ce que** le rapport entre la longueur (1) de la section de pressage (10) et le diamètre extérieur (d) de la section de pressage (10) est supérieur à 0,4, et se situe de préférence dans la plage comprise entre 0,4 et 0,8.

3. Fitting selon la revendication 1 ou 2,
**caractérisé**
**en ce que** le manchon de pressage (8) est produit à partir de cuivre ou d'aluminium.

4. Fitting selon l'une des revendications 1 à 3,
**caractérisé**
- **en ce que** l'extrémité (12) du manchon de pressage (8) distale par rapport au corps de base (4) est rabattue vers l'extérieur, et
- **en ce que** l'extrémité (16) du manchon de pressage (8) proximale par rapport au corps de base (4) présente un bourrelet (22) en saillie vers l'extérieur.

5. Fitting selon l'une des revendications 1 à 3,
**caractérisé**
- **en ce que** l'extrémité (12) du manchon de pressage (8) distale par rapport au corps de base (4) est rabattue vers l'extérieur, et
- **en ce qu'**une bague de retenue (24) reliée au corps de base (4) est prévue pour fixer le manchon de pressage (8).

6. Fitting selon l'une des revendications 1 à 5,
caractérisé en
- en ce que l'extrémité (16) du manchon de pressage (8) proximale par rapport au corps de base (4) présente un bord (30) alternativement interrompu avec des sections de retenue (32) et des évidements (34), et
- en ce que, sur le côté circonférentiel, les évidements (34) exposent une section angulaire supérieure à 180°.

7. Procédé pour établir une connexion entre un fitting selon l'une des revendications 1 à 6 et un tuyau,
- dans lequel le fitting comprend un corps de support et un manchon de pressage avec une section de pressage cylindrique,
- dans lequel une extrémité de tuyau est disposée entre le corps de support et le manchon de pressage,
- dans lequel un outil de pressage avec un contour de pressage cylindrique est appliqué à la section de pressage, et
- dans lequel le manchon de pressage est pressé radialement de façon cylindrique par contour de pressage sur la longueur de la section de pressage.

8. Procédé selon la revendication 7,
- dans lequel le manchon de pressage est pressé de manière cylindrique sur une longueur axiale dont le rapport au diamètre extérieur de la section de pressage est supérieur à 0,4, de préférence dans la plage comprise entre 0,4 et 0,8.

9. Procédé selon la revendication 7 ou 8,
- dans lequel l'outil de pressage est guidé au moins d'un côté de la section de pressage par une butée formée par le manchon de pressage.
